# EUROPÄISCHE PATENTSCHRIFT

(11) **EP 2 639 121 B1**
(45) Veröffentlichungstag und Bekanntmachung des Hinweises auf die Patenterteilung: **04.12.2019**
(21) Anmeldenummer: 13152529.7
(22) Anmeldetag: 24.01.2013
(51) Int. Cl.: B60S 1/52, B60S 1/48, B60S 1/08

(54) **Scheibenreinigungssystem und Scheibenreinigungsverfahren**
Window cleaning system and method for cleaning windows
Système de nettoyage de vitres et methode de nettoyage de vitres

(30) Priorität: 14.03.2012 DE 102012204028
(43) Veröffentlichungstag der Anmeldung: 18.09.2013
(73) Patentinhaber: ROBERT BOSCH GMBH, 70442 Stuttgart (DE)
(72) Erfinder: Gotzen, Nicolaas, 3070 Kartenberg (BE); Duval, Vincent, 1030 Bruxelles (BE)

(56) Entgegenhaltungen:
- EP-A2- 1 118 516
- DE-A1- 10 236 886
- DE-A1-102005 059 449
- DE-A1-102007 002 257
- DE-A1-102010 013 974
- JP-A- 2006 143 150
- US-A1- 2009 216 383

## Beschreibung

Die vorliegende Erfindung betrifft ein Scheibenreinigungssystem und ein Scheibenreinigungsverfahren.

### Stand der Technik

Herkömmliche Scheibenreinigungssysteme zum Reinigen von Windschutzscheiben für Fahrzeuge weisen zwei simultan geführte Scheibenwischer sowie zwei Reinigungsflüssigkeitsdüsen auf, welche zum Entfernen von Verschmutzungen gleichzeitig aktiviert werden können und dabei die komplette Windschutzscheibe reinigen.

Häufig treten jedoch während des Betriebes, beispielsweise durch Insekten hervorgerufene, schwer zu entfernende partielle Verschmutzungen auf, welche die Sicht durch die Scheibe behindern. Um derartige partielle Verschmutzungen vollständig zu entfernen, müssen herkömmliche Scheibenreinigungssysteme für zahlreiche Wischzyklen aktiviert werden, was mit einem hohen Verbrauch an Reinigungsflüssigkeit einhergeht und meist dennoch nicht zu einem optimalen Reinigungsergebnis führt.

Aus den Druckschriften DE 10 2005 059 449 A1, DE 10 2008 052 442 A1, DE 695 18 456 T2 JP 2006 143150 A und US 6,654,070 B1 sind verschiedene Bediensysteme zum Bedienen von Funktionen eines Fahrzeugs bekannt.

### Offenbarung der Erfindung

Gegenstand der vorliegenden Erfindung ist ein Scheibenreinigungssystem für ein Fahrzeug, insbesondere ein Kraftfahrzeug, welches
- eine Scheibenreinigungsvorrichtung zum Reinigen einer Scheibe, insbesondere der Windschutzscheibe,
- eine Positionseingabevorrichtung zur Eingabe einer Position auf der Scheibe und
- eine mit der Scheibenreinigungsvorrichtung und der Positionseingabevorrichtung signaltechnisch verbundene Steuereinrichtung,
umfasst, wobei die Scheibenreinigungsvorrichtung durch die Steuereinrichtung steuerbar ist, eine von der Positionseingabevorrichtung erfasste Position auf der Scheibe gezielt zu reinigen und wobei der mindestens eine Scheibenwischer mit zwei oder mehr Reinigungsflüssigkeitsdüsen ausgestattet ist, wobei die Reinigungsflüssigkeitsdüsen unabhängig voneinander aktivierbar sind, Reinigungsflüssigkeit auszugeben, wobei während einer Wischbewegung des Scheibenwischers gezielt diejenige beziehungsweise diejenigen Reinigungsflüssigkeitsdüse/n zur Reinigungsflüssigkeitsausgabe aktiviert werden, welche die von der Positionseingabevorrichtung erfasste Position auf der Scheibe nächstliegend überstreichen.

Das erfindungsgemäße Scheibenreinigungssystem ermöglicht es dem Benutzer, beispielsweise dem Fahrer des Fahrzeugs, eine Position auf der Scheibe, beispielsweise an der sich ein Insektenfleck oder eine sonstige Verschmutzung befindet, einzugeben und dadurch das Scheibenreinigungssystem zu veranlassen, gezielt diese Position der Scheibe zu reinigen.

Dadurch, dass das erfindungsgemäße Scheibenreinigungssystem die Scheibe gezielt in der von dem Benutzer eingegebenen Position - und nicht wie bei herkömmlichen Scheibenreinigungssystem komplett - reinigt, kann vorteilhafterweise sowohl der Verbrauch an Reinigungsflüssigkeit und Energie als auch der Abrieb der Wischgummis verringert werden. Zudem kann durch die gezielte Reinigung eine höhere Reinigungsqualität und damit eine bessere Sicht durch die Scheibe als mit herkömmlichen Scheibenreinigungssystemen erzielt werden.

Unter einer signaltechnischen Verbindung kann im Rahmen der vorliegenden Erfindung sowohl eine kabelgeführte als auch eine kabellose Signalverbindung verstanden werden.

Im Rahmen einer Ausführungsform ist durch die Positionseingabevorrichtung eine Zeigegeste, insbesondere des Benutzers, auf eine Position auf der Scheibe erfassbar. Dies kann beispielsweise durch eine Positionseingabevorrichtung realisiert werden, welche eine oder mehrere Kameras zum Erfassen einer Zeigegeste auf eine Position auf der Scheibe umfasst.

Im Rahmen einer anderen Ausführungsform ist durch die Positionseingabevorrichtung eine Berührung einer Position der Scheibe, insbesondere durch den Benutzer, erfassbar. Dies kann beispielsweise durch eine Positionseingabevorrichtung realisiert werden, welche in die Scheibe integriert ist und beispielsweise eine berührungsempfindliche Eingabefläche aufweist.

Die berührungsempfindliche Eingabefläche kann dabei auf einer aus dem Bereich von Touchscreens beziehungsweise Touchpads bekannten Technologie basieren. Beispielsweise kann die berührungsempfindliche Eingabefläche eine Indium-Zinn-Oxid umfassende Schicht aufweisen. Zum Beispiel kann die berührungsempfindliche wie in der Druckschrift US 6,654,070 B1 beschrieben ausgestaltet sein.

Im Rahmen einer weiteren Ausführungsform umfasst die Scheibenreinigungsvorrichtung mindestens eine Reinigungsflüssigkeitsdüse zum Auftragen einer Reinigungsflüssigkeit auf die Scheibe, insbesondere durch welche die Reinigungsflüssigkeit gezielt auf die von der Positionseingabevorrichtung erfasste Position auf der Scheibe auftragbar ist. So kann vorteilhafterweise der Reinigungsflüssigkeitsverbrauch deutlich reduziert werden. Beispielsweise kann die Scheibenreinigungsvorrichtung zwei Reinigungsflüssigkeitsdüsen oder gegebenenfalls sogar eine Vielzahl von Reinigungsflüssigkeitsdüsen umfassen. Die Reinigungsflüssigkeitsdüse/n können dabei sowohl am Fahrzeug beziehungsweise der Scheibe als auch wie später näher erläutert an einem Scheibenwischer angebracht sein.

Im Rahmen einer speziellen Ausgestaltung dieser Ausführungsform ist die Richtung, in welche die mindestens eine Reinigungsflüssigkeitsdüse die Reinigungsflüssigkeit spritzt, automatisch einstellbar. Auf diese Weise kann die Reinigungsflüssigkeit gezielt auf die von der Positionseingabevorrichtung erfasste Position auf der Scheibe gespritzt werden und so der Verbrauch an Reinigungsflüssigkeit minimiert werden.

Im Rahmen einer weiteren Ausführungsform umfasst die Scheibenreinigungsvorrichtung mindestens einen Scheibenwischer, welcher dazu ausgelegt ist, gezielt, insbesondere zwei- oder mehrfach, (nur) über einen Teilbereich der Scheibe zu wischen, innerhalb dessen sich die von der Positionseingabevorrichtung erfasste Position befindet. So kann vorteilhafterweise der Energieverbrauch und der Wischgummiabrieb deutlich reduziert werden.

Hinsichtlich weiterer technischer Merkmale und Vorteile des erfindungsgemäßen Scheibenreinigungssystems wird hiermit explizit auf die Erläuterungen im Zusammenhang mit dem erfindungsgemäßen Verfahren und den Figuren verwiesen.

Ein weiterer Gegenstand der vorliegenden Erfindung ist ein Verfahren zum Reinigen einer Scheibe, insbesondere der Windschutzscheibe, insbesondere eines (Kraft-)Fahrzeugs, zum Beispiel mit einem erfindungsgemäßen Scheibenreinigungssystem, umfassend die Verfahrensschritte:
a) Erfassen einer Eingabe einer Position auf der Scheibe durch einen Benutzer, und
b) Gezieltes Reinigen der erfassten Position auf der Scheibe, insbesondere mittels einer Scheibenreinigungsvorrichtung, wobei Verfahrensschritt b) mittels eines Scheibenwischer erfolgt, welcher mit zwei oder mehr Reinigungsflüssigkeitsdüsen ausgestattet ist, wobei Reinigungsflüssigkeit gezielt aus derjenigen beziehungsweise denjenigen Reinigungsflüssigkeitsdüse/n ausgegeben wird, welche während einer Wischbewegung des Scheibenwischers die erfasste Position nächstliegend überstreichen.

Verfahrensschritt a) kann dabei beispielsweise durch eine im Rahmen des erfindungsgemäßen Scheibenreinigungssystems beschriebene Positionseingabevorrichtung erfolgen.

Verfahrensschritt b) kann dabei beispielsweise durch eine im Rahmen des erfindungsgemäßen Scheibenreinigungssystems beschriebene Scheibenreinigungsvorrichtung erfolgen.

Im Rahmen einer Ausführungsform wird in Verfahrensschritt a) eine Positionseingabe durch eine Zeigegeste des Benutzers auf eine Position der Scheibe erfasst.

Im Rahmen einer anderen Ausführungsform wird in Verfahrensschritt a) eine Positionseingabe durch eine Berührung einer Position der Scheibe durch den Benutzer erfasst.

Im Rahmen einer weiteren Ausführungsform wird in Verfahrensschritt b) eine Reinigungsflüssigkeit gezielt auf die erfasste Position aufgetragen. Dies kann beispielsweise durch eine im Rahmen des erfindungsgemäßen Scheibenreinigungssystems beschriebene Reinigungsflüssigkeitsdüse erfolgen.

Im Rahmen einer weiteren Ausführungsform wird in Verfahrensschritt b) die Reinigungsflüssigkeit gezielt auf die erfasste Position gespritzt. Dies kann insbesondere durch eine Reinigungsflüssigkeitsdüse erfolgen, bei der die Richtung, in welcher die Reinigungsflüssigkeit gespritzt wird, automatisch einstellbar ist.

Im Rahmen einer weiteren Ausführungsform wischt in Verfahrensschritt b) ein Scheibenwischer, insbesondere zwei- oder mehrfach, gezielt (nur) über einen Teilbereich der Scheibe, innerhalb dessen sich die erfasste Position befindet.

Hinsichtlich weiterer technischer Merkmale und Vorteile des erfindungsgemäßen Scheibenreinigungsverfahrens wird hiermit explizit auf die Erläuterungen im Zusammenhang mit dem erfindungsgemäßen Verfahren und den Figuren verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Draufsicht auf die Innenseite einer Windschutzscheibe, welche mit einer Ausführungsform des erfindungsgemäßen Schreibenreinigungssystems ausgestattet ist;
- Fig. 2: einen schematischen Querschnitt durch eine Windschutzscheibe, welche mit einer Ausführungsform des erfindungsgemäßen Schreibenreinigungssystems ausgestattet ist, die eine Positionseingabevorrichtung in Form einer berührungsempfindlichen Eingabefläche aufweist;
- Fig. 3: einen schematischen Querschnitt durch eine Windschutzscheibe, welche mit einer Ausführungsform des erfindungsgemäßen Schreibenreinigungssystems ausgestattet ist, die eine Positionseingabevorrichtung in Form eines Kamerasystems aufweist;
- Fig. 4: eine schematische Draufsicht auf die Außenseite einer Windschutzscheibe, welche mit einer Ausführungsform des erfindungsgemäßen Schreibenreinigungssystems ausgestattet ist, die eine Reinigungsflüssigkeitsdüse mit automatisch einstellbarer Spritzrichtung aufweist;
- Fig. 5: eine schematische Draufsicht auf die Außenseite einer Windschutzscheibe, welche mit einer Ausführungsform des erfindungsgemäßen Schreibenreinigungssystems ausgestattet ist, die einen gezielt Teilbereiche der Windschutzscheibe wischenden Scheibenwischer umfasst;
- Fig. 6: eine schematische Draufsicht auf die Außenseite einer Windschutzscheibe, welche mit einer Ausführungsform des erfindungsgemäßen Schreibenreinigungssystems ausgestattet ist, die sowohl eine Reinigungsflüssigkeitsdüse mit automatisch einstellbarer Spritzrichtung als auch einen gezielt Teilbereiche der Windschutzscheibe wischenden Scheibenwischer umfasst; und
- Fig. 7: eine schematische Draufsicht auf die Außenseite einer Windschutzscheibe, welche mit einer Ausführungsform des erfindungsgemäßen Schreibenreinigungssystems ausgestattet ist, die einen Scheibenwischer mit einer Vielzahl von unabhängig voneinander aktivierbaren Reinigungsflüssigkeitsdüsen umfasst.

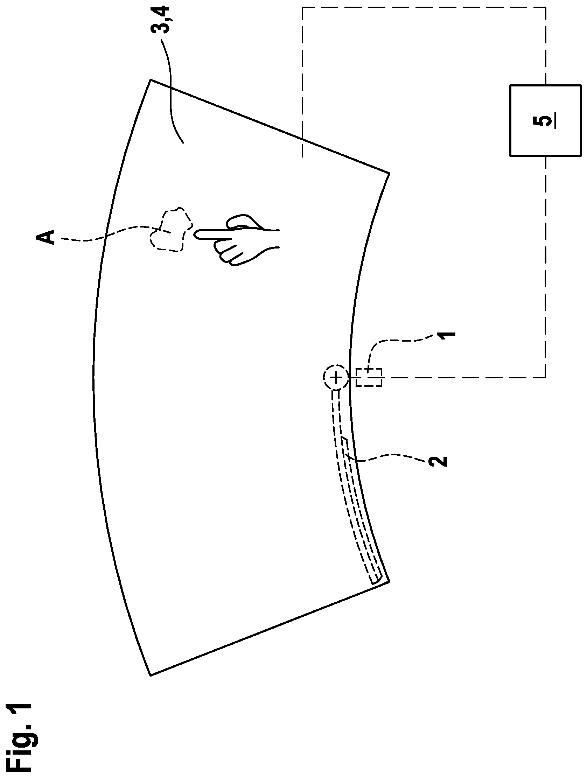

Figur 1 ist eine schematische Draufsicht auf die Innenseite einer Windschutzscheibe, welche mit einem Scheibenreinigungssystem ausgestattet ist.

Figur 1 illustriert, dass das Scheibenreinigungssystem eine Positionseingabevorrichtung 4 umfasst, die es einem Benutzer, beispielsweise durch eine Zeigegeste oder eine Berührung, ermöglicht eine Position A auf der Scheibe 3 einzugeben, welche eine Verschmutzung aufweist beziehungsweise welche gereinigt werden soll.

Figur 1 zeigt zudem, dass das Scheibenreinigungssystem weiterhin eine Scheibenreinigungsvorrichtung 1,2 zum Reinigen der Scheibe 3 aufweist, welche eine Reinigungsflüssigkeitsdüse 1 und einen Scheibenwischer 2 umfasst.

Ferner veranschaulicht Figur 1, dass sowohl die Scheibenreinigungsvorrichtung 1,2 als auch die Positionseingabevorrichtung 4 signaltechnisch mit einer Steuereinrichtung 5 verbunden ist. Die signaltechnische Verbindung ist dabei sowohl durch Kabel als auch kabellos, beispielsweise mittels Funk oder Infrarot, realisierbar. Die Steuereinrichtung 5 kann auf diese Weise die Scheibenreinigungsvorrichtung 1,2 auf der Basis von Positionsdaten steuern, welche sie von der Positionseingabevorrichtung 4 erhalten hat. Auf diese Weise kann die Steuereinrichtung 5 die Scheibenreinigungsvorrichtung 1,2 veranlassen, gezielt eine vom Benutzer eingegebene beziehungsweise von der Positionseingabevorrichtung 4 erfasste Position A auf der Scheibe 3 zu reinigen.

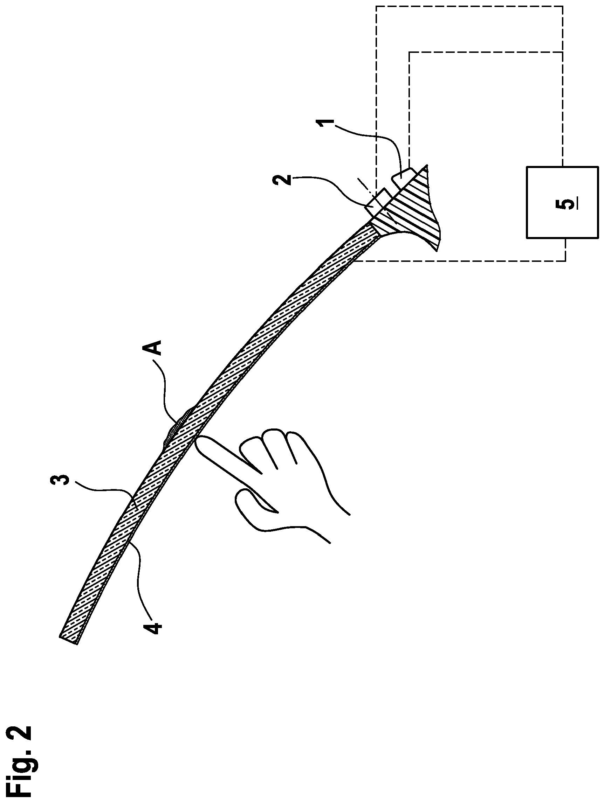

Figur 2 zeigt einen schematischen Querschnitt durch eine Windschutzscheibe 3, welche mit einer Ausführungsform des erfindungsgemäßen Schreibenreinigungssystems ausgestattet ist, in der die Positionseingabevorrichtung 4 in Form einer berührungsempfindlichen Eingabefläche ausgestaltet ist. Figur 2 veranschaulicht, dass dabei die berührungsempfindliche Eingabefläche auf der Innenseite der Scheibe 3 ausgebildet ist und ähnlich eines Tochscreens beziehungsweise Touchpads funktioniert. Figur 2 illustriert, dass der Benutzer die berührungsempfindliche Eingabefläche berühren und auf diese Weise die Position A eingeben kann, welche auf der Außenseite der Scheibe 3 durch die Scheibenreinigungsvorrichtung 1,2 gezielt von Schmutz gereinigt werden soll.

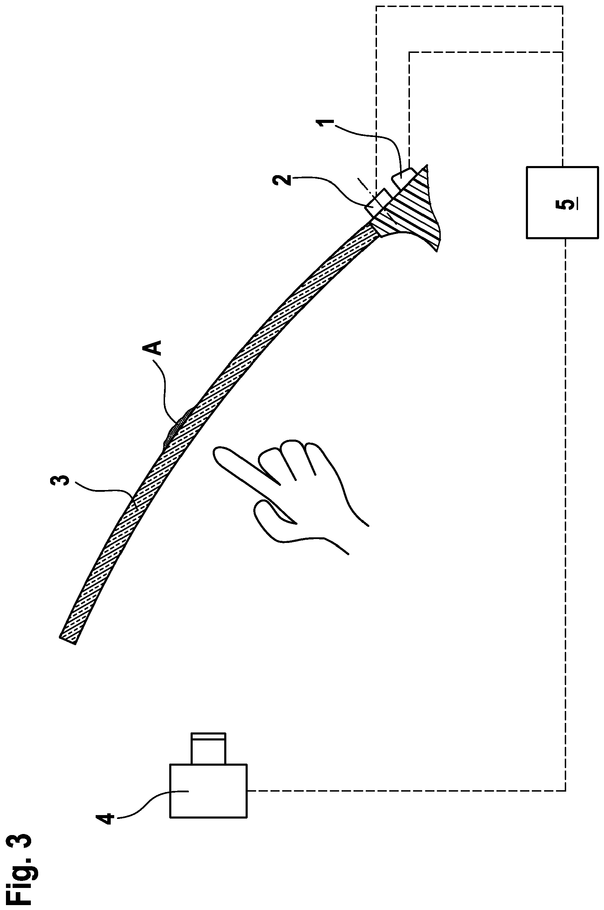

Figur 3 zeigt einen schematischen Querschnitt durch eine Windschutzscheibe 3, welche mit einer Ausführungsform des erfindungsgemäßen Schreibenreinigungssystems ausgestattet ist, in der die Positionseingabevorrichtung 4 in Form eines Kamerasystems ausgestaltet ist. Figur 3 veranschaulicht, dass dabei das Kamerasystem im Innenraum des Fahrzeugs angeordnet ist. Figur 3 illustriert, dass dabei der Benutzer die Scheibe 3 nicht berühren muss, sondern die Eingabe der Position A durch eine berührungslose Zeigegeste auf die zu reinigende Position A auf der Scheibe 3 erfolgen kann.

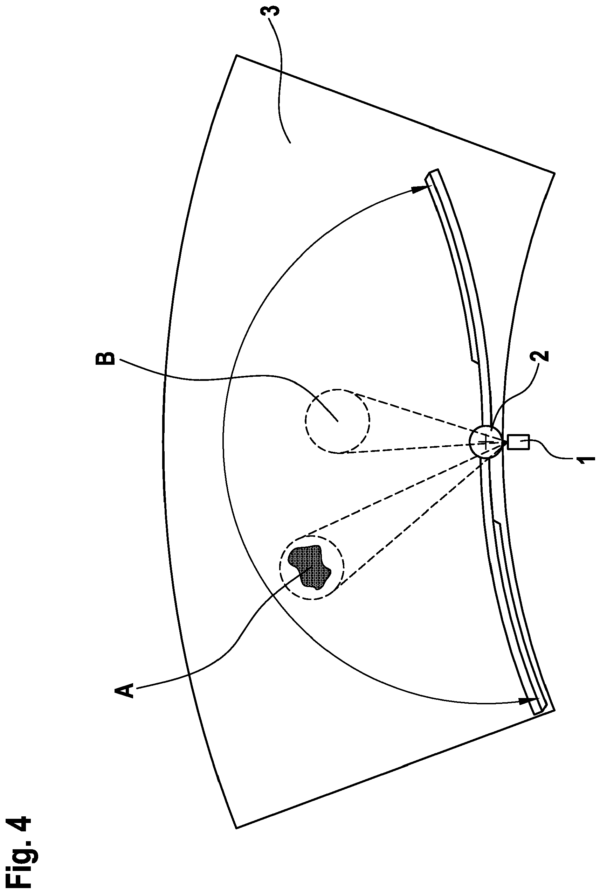

Figur 4 ist eine schematische Draufsicht auf die Außenseite einer Windschutzscheibe, welche mit einer Ausführungsform des erfindungsgemäßen Schreibenreinigungssystems ausgestattet ist, in welcher die Scheibenreinigungsvorrichtung 1,2 zum Auftragen einer Reinigungsflüssigkeit auf die Scheibe 3 eine Reinigungsflüssigkeitsdüse 1 mit einer automatisch einstellbaren Spritzrichtung umfasst. Dabei ermöglicht es die Reinigungsflüssigkeitsdüse 1 mit der automatisch einstellbaren Spritzrichtung, die Reinigungsflüssigkeit gezielt auf die von dem Benutzer eingegebene beziehungsweise von der Positionseingabevorrichtung 4 erfasste Position A auf der Scheibe 3 zu spritzen.

Figur 4 veranschaulicht, dass die Reinigungsflüssigkeitsdüse 1 dabei derart automatisch einstellbar ist, dass diese insofern der Benutzer die Position A auf der Scheibe 3 eingibt, gezielt Reinigungsflüssigkeit auf die Position A auf der Scheibe 3 aufgetragen wird. Insofern der Benutzer eine andere Position B auf der Scheibe 3 eingeben würde, würde die Spritzrichtung der Reinigungsflüssigkeitsdüse 1 automatisch dahingehend geändert werden, dass die Reinigungsflüssigkeit auf die Position B auf der Scheibe 3 aufgetragen wird. Figur 4 zeigt, dass das Scheibenreinigungssystem 1,2 weiterhin einen Scheibenwischer 2 umfasst, welcher jedoch in der gezeigten Ausführungsform die komplette Scheibe 3 wischt.

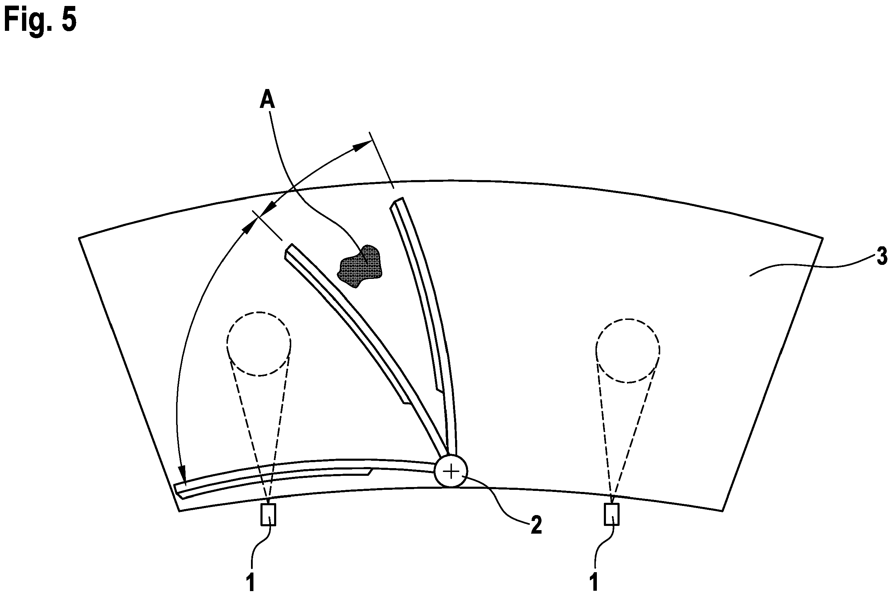

Figur 5 zeigt eine schematische Draufsicht auf die Außenseite einer Windschutzscheibe, welche mit einer Ausführungsform des erfindungsgemäßen Schreibenreinigungssystems ausgestattet ist, in der die Scheibenreinigungsvorrichtung 1,2 einen Scheibenwischer umfasst, der dazu ausgelegt ist mehrfach gezielt über einen Teilbereich der Windschutzscheibe 3 zu wischen, innerhalb dessen sich die vom Benutzer eingegebene beziehungsweise von der Positionseingabevorrichtung 4 erfasst Position A befindet.

Figur 5 veranschaulicht, dass ausgehend von der Ruheposition des Scheibenwischers 2 eine Wischbewegung in eine erste Wischrichtung gestartet wird, welche nach dem Überstreichen eines Teilbereichs, innerhalb dessen sich die vom Benutzer eingegebene und von der Positionseingabevorrichtung 4 erfasst Position A befindet, in eine zur ersten Wischrichtung entgegen gesetzte zweite Wischrichtung umgekehrt wird, wobei die Wischbewegung in der zweiten Wischrichtung nach dem erneuten Überstreichen des Teilbereichs wiederum in die erste Wischrichtung umgekehrt wird. Dieser Vorgang des abwechselnden Überstreichens des Teilbereiches in den beiden Wischrichtungen kann noch mehrfach wiederholt werden, bis der Scheibenwischer 2 schließlich wieder in die Ruheposition bewegt wird.

Die Anzahl der zum Entfernen von Insektenflecken notwendigen Überstreichung kann abhängig von fahrzeugspezifischen Kenndaten, wie der Oberflächenbeschaffenheit der Scheibe, dem Anpressdruck des Scheibenwischer, et cetera, sein. Um einen optimalen Reinigungseffekt zu erzielen, kann beispielsweise die für den jeweiligen Fahrzeugtyp optimale Überstreichungszahl empirisch ermittelt und eine entsprechend Kennzahl in das Scheibenreinigungssystem einprogrammiert werden.

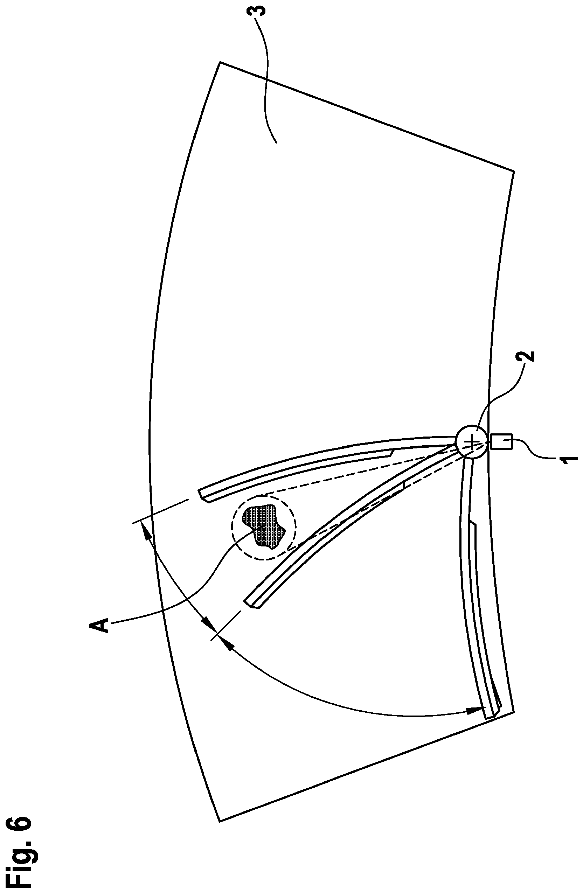

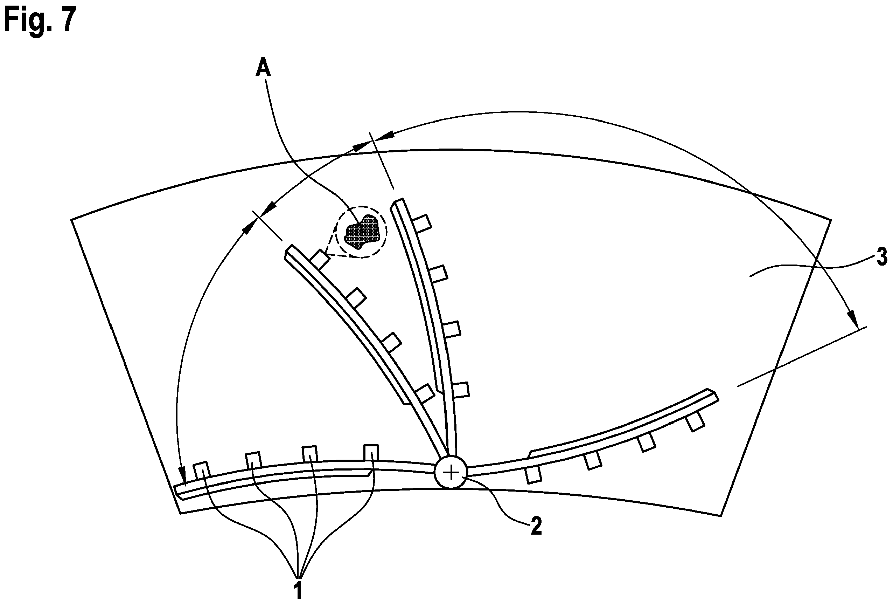

Zum besseren Verständnis des Prinzips dieser Ausführungsform, ist in Figur 5 ein Scheibenreinigungssystem 1,2 mit nur einem Scheibenwischer 2 dargestellt. Das Prinzip ist jedoch auch auf Scheibenreinigungssysteme 1,2 mit zwei Scheibenwischern 2 übertragbar. Insofern die beiden Scheibenwischer 2 unabhängig voneinander steuerbar sind, ist es möglich jeweils nur einen der beiden Scheibenwischer 2 den Teilbereich überstreichen zu lassen. Das Prinzip führt jedoch auch bei Scheibenreinigungssystemen 1,2 mit zwei voneinander abhängig bewegten Scheibenwischern 2 zu einer Senkung der Energie und des Abriebs, da nur der Teilbereich und nicht die komplette Scheibe 3 mehrfach von den beiden Scheibenwischern 3 überstrichen wird. Entsprechendes gilt auch für die in den Figuren 6 und 7 veranschaulichten Prinzipien.

Figur 5 zeigt weiterhin, dass es im Rahmen dieser Ausführungsform möglich ist herkömmliche Reinigungsflüssigkeitsdüsen 1 einzusetzen, deren Spritzrichtung nicht automatisch einstellbar ist.

Vorzugsweise wird die in Figur 5 gezeigte Ausführungsform jedoch mit der in Figur 4 gezeigten Ausführungsform kombiniert, woraus die in Figur 6 gezeigte Ausführungsform resultiert.

Figur 6 veranschaulicht, dass im Rahmen dieser Ausführungsform die Scheibenreinigungsvorrichtung 1,2 sowohl eine Reinigungsflüssigkeitsdüse 1 mit automatisch einstellbarer Spritzrichtung als auch einen Scheibenwischer 2 umfasst, welcher dazu ausgelegt ist, gezielt über einen Teilbereich der Scheibe 3 zu wischen, innerhalb dessen sich die von dem Benutzer eingegebene beziehungsweise von der Positionseingabevorrichtung 4 erfasste Position A befindet. So kann vorteilhafterweise ein besonders guter Reinigungseffekt erzielt und der Reinigungsflüssigkeitsverbrauch, Energieverbrauch und Wischgummiabrieb besonders stark reduziert werden.

Figur 7 ist eine schematische Draufsicht auf die Außenseite einer Windschutzscheibe, welche mit einer Ausführungsform des erfindungsgemäßen Schreibenreinigungssystems ausgestattet ist, in welcher die Scheibenreinigungsvorrichtung 1,2 einen Scheibenwischer umfasst, der mit einer Vielzahl von über dessen Länge verteilt angeordneten Reinigungsflüssigkeitsdüsen 1 ausgestattet ist. Dabei können die Reinigungsflüssigkeitsdüsen 1 unabhängig voneinander zur Ausgabe von Reinigungsflüssigkeit aktiviert werden. Figur 7 veranschaulicht, dass während einer Wischbewegung des Scheibenwischers 2 gezielt nur diejenige Reinigungsflüssigkeitsdüse 1 zur Reinigungsflüssigkeitsausgabe aktiviert wird, welche die von dem Benutzer eingegebene beziehungsweise von der Positionseingabevorrichtung 4 erfasste Position A auf der Scheibe 3 nächstliegend überstreicht.

Dabei ist es grundsätzlich möglich, dass der Scheibenwischer 2 während der Wischbewegung die komplette Scheibe 3 überstreicht. Vorzugsweise ist der Scheibenwischer 2 jedoch analog zu der in Figur 5 gezeigten Ausführungsform dazu ausgelegt, gezielt über einen Teilbereich der Scheibe 3 zu wischen, innerhalb dessen sich die von dem Benutzer eingegebene beziehungsweise von der Positionseingabevorrichtung 4 erfasste Position A befindet.

## Patentansprüche

1. Scheibenreinigungssystem für ein Fahrzeug, umfassend
- eine Scheibenreinigungsvorrichtung (1,2) zum Reinigen einer Scheibe (3), insbesondere des Windschutzscheibe,
- eine Positionseingabevorrichtung (4) zur Eingabe einer Position (A) auf der Scheibe (3) und
- eine mit der Scheibenreinigungsvorrichtung (1,2) und der Positionseingabevorrichtung (4) signaltechnisch verbundene Steuereinrichtung (5)
wobei die Scheibenreinigungsvorrichtung (1,2) durch die Steuereinrichtung (5) steuerbar ist, eine von der Positionseingabevorrichtung (4) erfasste Position (A) auf der Scheibe (3) gezielt zu reinigen **dadurch gekennzeichnet, dass** der mindestens eine Scheibenwischer (2) mit zwei oder mehr Reinigungsflüssigkeitsdüsen (1) ausgestattet ist,
wobei die Reinigungsflüssigkeitsdüsen (1) unabhängig voneinander aktivierbar sind, Reinigungsflüssigkeit auszugeben,
wobei während einer Wischbewegung des Scheibenwischers (2) gezielt diejenige beziehungsweise diejenigen Reinigungsflüssigkeitsdüse/n (1) zur Reinigungsflüssigkeitsausgabe aktiviert werden, welche die von der Positionseingabevorrichtung (4) erfasste Position (A) auf der Scheibe (3) nächstliegend überstreichen.

2. Scheibenreinigungssystem nach Anspruch 1, wobei durch die Positionseingabevorrichtung (4) - eine Zeigegeste auf eine Position (A) auf der Scheibe (3) und/oder - eine Berührung einer Position (A) auf der Scheibe (3) erfassbar ist.

3. Scheibenreinigungssystem nach Anspruch 1 oder 2, wobei die Scheibenreinigungsvorrichtung (1,2) mindestens eine Reinigungsflüssigkeitsdüse (1) zum Auftragen einer Reinigungsflüssigkeit auf die Scheibe (3) umfasst, wobei durch die mindestens eine Reinigungsflüssigkeitsdüse (1) die Reinigungsflüssigkeit gezielt auf die von der Positionseingabevorrichtung (4) erfasste Position (A) auf der Scheibe (3) auftragbar ist.

4. Scheibenreinigungssystem nach Anspruch 3, wobei die Richtung, in welche die mindestens eine Reinigungsflüssigkeitsdüse (1) die Reinigungsflüssigkeit spritzt, automatisch einstellbar ist, insbesondere um die Reinigungsflüssigkeit gezielt auf die von der Positionseingabevorrichtung (4) erfasste Position (A) auf der Scheibe (3) zu spritzen.

5. Scheibenreinigungssystem nach einem der Ansprüche 1 bis 4, wobei die Scheibenreinigungsvorrichtung (1,2) mindestens einen Scheibenwischer (2) umfasst,
- wobei der mindestens eine Scheibenwischer (2) dazu ausgelegt ist, gezielt über einen Teilbereich der Scheibe (3) zu wischen, innerhalb dessen sich die von der Positionseingabevorrichtung (4) erfasste Position (A) befindet.

6. Scheibenreinigungssystem nach einem der Ansprüche 1 bis 5, wobei die Positionseingabevorrichtung (4) in die Scheibe (3) integriert ist.

7. Scheibenreinigungssystem nach Anspruch 6, wobei die Positionseingabevorrichtung (4) eine berührungsempfindliche Eingabefläche aufweist, welche auf der Innenseite der Scheibe (3) ausgebildet ist.

8. Scheibenreinigungssystem nach Anspruch 7, wobei die berührungsempfindliche Eingabefläche eine Indium-Zinn-Oxid umfassende Schicht aufweist.

9. Scheibenreinigungssystem nach einem der Ansprüche 1 bis 8, wobei die Positionseingabevorrichtung (4) eine oder mehrere Kameras zum Erfassen einer Zeigegeste auf eine Position (A) der Scheibe (3) umfasst.

10. Verfahren zum Reinigen einer Scheibe (3), insbesondere einer Windschutzscheibe (3) eines Fahrzeugs, umfassend die Verfahrensschritte:
a) Erfassen einer Eingabe einer Position (A) auf der Scheibe (3) durch einen Benutzer, insbesondere mittels einer Positionseingabevorrichtung (4), und
b) Gezieltes Reinigen der erfassten Position (A) auf der Scheibe (3), insbesondere mittels einer Scheibenreinigungsvorrichtung (1,2), wobei Verfahrensschritt b) mittels eines Scheibenwischer (2) erfolgt, welcher mit zwei oder mehr Reinigungsflüssigkeitsdüsen (1) ausgestattet ist, wobei Reinigungsflüssigkeit gezielt aus derjenigen beziehungsweise denjenigen Reinigungsflüssigkeitsdüse/n (1) ausgegeben wird, welche während einer Wischbewegung des Scheibenwischers (2) die erfasste Position (A) nächstliegend überstreichen.

11. Verfahren nach Anspruch 10, wobei in Verfahrensschritt a) eine Positionseingabe - durch eine Zeigegeste des Benutzers auf eine Position (A) auf der Scheibe (3), und/oder - durch eine Berührung einer Position (A) auf der Scheibe (3) durch den Benutzer erfasst wird.

12. Verfahren nach Anspruch 10 oder 11, wobei in Verfahrensschritt b) auf die erfasste Position (A) gezielt eine Reinigungsflüssigkeit aufgetragen wird.

13. Verfahren nach Anspruch 12, wobei in Verfahrensschritt b) die Reinigungsflüssigkeit gezielt auf die erfasste Position (A) gespritzt wird.

14. Verfahren nach einem der Ansprüche 10 bis 13, wobei in Verfahrensschritt b) ein Scheibenwischer (2) gezielt über einen Teilbereich der Scheibe (3) wischt, innerhalb dessen sich die erfasste Position (A) befindet.

## Claims

1. Window cleaning system for a vehicle, comprising
- a window cleaning device (1, 2) for cleaning a window (3), in particular the windscreen,
- a position input device (4) for inputting a position (A) on the window (3), and
- a control device (5) connected to the window cleaning device (1, 2) and to the position input device (4) for signalling purposes,
wherein the window cleaning device (1, 2) can be controlled by the control device (5) in order specifically to clean a position (A), detected by the position input device (4), on the window (3),
**characterized in that**
the at least one window wiper (2) is provided with two or more cleaning liquid nozzles (1),
wherein the cleaning liquid nozzles (1) can be activated independently of one another in order to discharge cleaning liquid,
wherein, during a wiping movement of the window wiper (2), specifically the cleaning liquid nozzle (1) or the cleaning liquid nozzles (1) which sweeps or sweep closest over the position (A), detected by the position input device (4), on the window (3) are activated for discharging cleaning liquid.

2. Window cleaning system according to Claim 1, wherein a pointing gesture to a position (A) on the window (3) and/or touching of a position (A) on the window (3) can be detected by the position input device (4) .

3. Window cleaning system according to Claim 1 or 2, wherein the window cleaning device (1, 2) comprises at least one cleaning liquid nozzle (1) for applying a cleaning liquid to the window (3), wherein the cleaning liquid can be applied by the at least one cleaning liquid nozzle (1) specifically to the position (A), detected by the position input device (4), on the window (3).

4. Window cleaning system according to Claim 3, wherein the direction in which the at least one cleaning liquid nozzle (1) sprays the cleaning liquid can be set automatically, in particular in order to spray the cleaning liquid specifically onto the position (A), detected by the position input device (4), on the window (3).

5. Window cleaning system according to one of Claims 1 to 4, wherein the window cleaning device (1, 2) comprises at least one window wiper (2),
- wherein the at least one window wiper (2) is configured to wipe specifically over a partial region of the window (3), within which partial region the position (A) detected by the position input device (4) is located.

6. Window cleaning system according to one of Claims 1 to 5, wherein the position input device (4) is integrated in the window (3).

7. Window cleaning system according to Claim 6, wherein the position input device (4) has a touch-sensitive input surface which is formed on the inner side of the window (3).

8. Window cleaning system according to Claim 7, wherein the touch-sensitive input surface has a layer comprising indium tin oxide.

9. Window cleaning system according to one of Claims 1 to 8, wherein the position input device (4) comprises one or more cameras for detecting a pointing gesture to a position (A) on the window (3) .

10. Method for cleaning a window (3), in particular a windscreen (3) of a vehicle, comprising the method steps of:
a) detecting an input of a position (A) on the window (3) by a user, in particular by means of a position input device (4), and
b) specifically cleaning the detected position (A) on the window (3), in particular by means of a window cleaning device (1, 2), wherein method step b) takes place by means of a window wiper (2) which is provided with two or more cleaning liquid nozzles (1), wherein cleaning liquid is discharged specifically from that cleaning liquid nozzle (1) or those cleaning liquid nozzles (1) which sweeps or sweep closest over the detected position (A) during a wiping movement of the window wiper (2).

11. Method according to Claim 10, wherein, in method step a), a position input - by a pointing gesture of the user to a position (A) on the window (3), and/or - by touching of a position (A) on the window (3) by the user is detected.

12. Method according to Claim 10 or 11, wherein, in method step b), a cleaning liquid is applied specifically to the detected position (A).

13. Method according to Claim 12, wherein, in method step b), the cleaning liquid is sprayed specifically onto the detected position (A).

14. Method according to one of Claims 10 to 13, wherein, in method step b), a window wiper (2) wipes specifically over a partial region of the window (3), within which partial region of the detected position (A) is located.

## Revendications

1. Système de nettoyage de vitres pour un véhicule, comprenant
- un dispositif de nettoyage de vitres (1, 2) pour le nettoyage d'une vitre (3), en particulier du pare-brise,
- un dispositif d'entrée de position (4) pour entrer une position (A) sur la vitre (3) et
- un dispositif de commande (5) relié selon la technique des signaux au dispositif de nettoyage de vitres (1, 2) et au dispositif d'entrée de position (4),
dans lequel le dispositif de nettoyage de vitres (1, 2) peut être commandé par le dispositif de commande (5), pour nettoyer de manière adéquate une position (A) sur la vitre (3) détectée par le dispositif d'entrée de position (4),
**caractérisé en ce que** ledit au moins un essuie-glace (2) est muni de deux buses de liquide de nettoyage (1), ou plus,
dans lequel les buses de liquide de nettoyage (1) peuvent être activées indépendamment l'une de l'autre, pour décharger du liquide de nettoyage,
dans lequel pendant un mouvement d'essuyage de l'essuie-glace (2), on active de manière adéquate la ou les buse(s) de liquide de nettoyage (1) destinée(s) à la projection de liquide de nettoyage, qui balaient le plus près la position (A) sur la vitre (3) détectée par le dispositif d'entrée de position (4).

2. Système de nettoyage de vitres selon la revendication 1, dans lequel on peut détecter au moyen du dispositif d'entrée de position (4) un geste d'indication d'une position (A) sur la vitre (3) et/ou un contact avec une position (A) sur la vitre (3).

3. Système de nettoyage de vitres selon la revendication 1 ou 2, dans lequel le dispositif de nettoyage de vitres (1, 2) comprend au moins une buse de liquide de nettoyage (1) pour déposer un liquide de nettoyage sur la vitre (3), dans lequel le liquide de nettoyage peut être déposé de manière adéquate sur la position (A) détectée par le dispositif d'entrée de position (4) sur la vitre (3) au moyen de ladite au moins une buse de liquide de nettoyage (1).

4. Système de nettoyage de vitres selon la revendication 3, dans lequel la direction, dans laquelle ladite au moins une buse de liquide de nettoyage (1) projette le liquide de nettoyage est réglable de façon automatique, en particulier pour projeter le liquide de nettoyage de manière adéquate sur la position (A) détectée par le dispositif d'entrée de position (4) sur la vitre (3).

5. Système de nettoyage de vitres selon l'une quelconque des revendications 1 à 4, dans lequel le dispositif de nettoyage de vitres (1, 2) comprend au moins un essuie-glace.(2),
- dans lequel ledit au moins un essuie-glace (2) est conçu pour essuyer de manière adéquate une région partielle de la vitre (3), à l'intérieur de laquelle se trouve la position (A) détectée par le dispositif d'entrée de position (4).

6. Système de nettoyage de vitres selon l'une quelconque des revendications 1 à 5, dans lequel le dispositif d'entrée de position (4) est intégré dans la vitre (3).

7. Système de nettoyage de vitres selon la revendication 6, dans lequel le dispositif d'entrée de position (4) présente une face d'entrée sensible au contact, qui est formée sur le côté intérieur de la vitre (3) .

8. Système de nettoyage de vitres selon la revendication 7, dans lequel la face d'entrée sensible au contact présente une couche comprenant de l'oxyde d'indium-étain.

9. Système de nettoyage de vitres selon l'une quelconque des revendications 1 à 8, dans lequel le dispositif d'entrée de position (4) comprend une ou plusieurs caméra(s) pour détecter un geste d'indication vers une position (A) de la vitre (3).

10. Procédé de nettoyage d'une vitre (3), en particulier d'un pare-brise (3) d'un véhicule, comprenant les étapes suivantes:
a) détecter une entrée d'une position (A) sur la vitre (3) par un utilisateur, en particulier au moyen d'un dispositif d'entrée de position (4), et
b) nettoyer de manière adéquate la position détectée (A) sur la vitre (3), en particulier au moyen d'un dispositif de nettoyage de vitres (1, 2), dans lequel on exécute l'étape de procédé b) au moyen d'un essuie-glace (2), qui est muni de deux buses de liquide de nettoyage (1), ou plus, dans lequel on décharge du liquide de nettoyage de manière adéquate à partir de la ou des buse (s) de liquide de nettoyage (1), qui balaie (nt) le plus près la position détectée (A) pendant le mouvement d'essuyage de l'essuie-glace (2).

11. Procédé selon la revendication 10, dans lequel on détecte à l'étape de procédé a) une entrée de position par un geste d'indication de l'utilisateur vers une position (A) sur la vitre (3) et/ou par un contact d'une position (A) sur la vitre (3) par l'utilisateur.

12. Procédé selon la revendication 10 ou 11, dans lequel on dépose à l'étape de procédé b) un liquide de nettoyage de manière adéquate sur la position détectée (A).

13. Procédé selon la revendication 12, dans lequel on projette à l'étape de procédé b) le liquide de nettoyage de manière adéquate sur la position détectée (A).

14. Procédé selon l'une quelconque des revendications 10 à 13, dans lequel à l'étape de procédé b) un essuie-glace (2) essuie de manière adéquate une région partielle de la vitre (3), à l'intérieur de laquelle se trouve la position détectée (A).
